# EUROPEAN PATENT SPECIFICATION

(11) **EP 3 450 247 B1**
(45) Date of publication and mention of the grant of the patent: **02.12.2020**
(21) Application number: 18191882.2
(22) Date of filing: 31.08.2018
(51) Int. Cl.: B60P 1/52

(54) **PLATFORM FOR A COMMERCIAL VEHICLE**
PLATTFORM FÜR EIN NUTZFAHRZEUG
PLATE-FORME POUR UN VÉHICULE COMMERCIAL

(30) Priority: 31.08.2017 IT 201700097920
(43) Date of publication of application: 06.03.2019
(73) Proprietor: Iveco S.p.A., 10156 Torino (IT)
(72) Inventor: BERNARDINI, Alessandro, 16123 GENOVA (IT); FINOTELLO, Roberto, 10040 LOMBARDORE (TO) (IT)
(74) Representative: Bongiovanni, Simone

(56) References cited:
- FR-A5- 2 122 015
- US-A- 3 406 849
- US-A- 4 036 345
- US-A- 4 841 883

## Description

### TECHNICAL FIELD

The invention relates to a platform of a vehicle, more in particular to a reduced-friction platform for handling freight in a commercial vehicle.

### BACKGROUND ART

Road transport vehicles, so-called light or heavy commercial vehicles, comprise a support plane configured to support objects with different weights and shapes.

When these objects are relatively heavy, handling means are usually used, such as, for example, pallet jacks, forklifts, removable equipment for lifting and moving loads.

However, the use of these handling means becomes difficult in light commercial vehicles, where there is not much space available. Furthermore, these means could break down, thus making it impossible for the objects to be handled and moved on the platform; finally, these means are particularly expensive.

Examples of known support means according to the preamble of claim 1 are disclosed in prior art documents US4036345 A, US3406849 A or FR2122015 A5.

### DISCLOSURE OF INVENTION

The object of the invention is to solve at least one of the aforesaid problems in a simple and economic fashion.

In order to do so, the invention provides a platform according to the appended set of claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 shows a view from the top, with parts removed for greater clarity, of a vehicle comprising a platform according to the invention;
- figure 2a is a side view, with parts removed for greater clarity, of a first embodiment of the platform according to the invention in a first operating configuration;
- figure 2b is a cross section of the platform of figure 2a;
- figure 3a is a side view, with parts removed for greater clarity, of the platform of figure 2a in a second operating configuration;
- figure 3b is a cross section of the platform of figure 3a;
- figure 4a is a side view, with parts removed for greater clarity, of a second embodiment of the platform according to the invention in a first operating configuration;
- figure 4b is a cross section of the platform of figure 4a;
- figure 5a is a side view, with parts removed for greater clarity, of the platform of figure 4a in a second operating configuration;
- figure 5b is a cross section of the platform of figure 5a;
- figure 6a is a side view, with parts removed for greater clarity, of a third embodiment of the platform according to the invention in a first operating configuration; and
- figure 6b is a side view, with parts removed for greater clarity, of the platform of figure 6a in a second operating configuration.

### BEST MODE FOR CARRYING OUT THE INVENTION

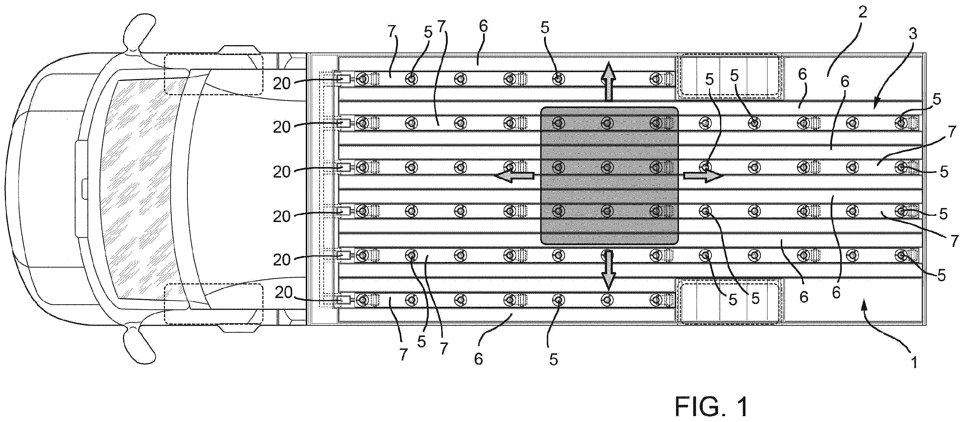

Figure 1 shows a platform 1 for the transport of objects in a road transport vehicle 100. The platform 1 is housed on a bottom wall 2 of the vehicle and defines a support plane 3 for the objects to be transported, which is substantially parallel to the bottom wall 2 of the vehicle.

Advantageously, the platform 1 comprises a plurality of low friction sliding means 5, preferably a plurality of rolling balls, which are configured to hold a first position, in which they do not vertically project relative to the support plane 3, and a second position, in which they vertically project relative to the support plane 3, thus directly coming into contact with the objects to be transported.

Preferably, the platform 1 comprises at least one first element 6, in the case described herein, a plurality of first elements 6 fixed to the bottom wall 2, each defining the support surface 3, and at least one second element 7, in the case described herein, a plurality of second elements 7, which are movable relative to the bottom wall 2.

Advantageously, the second elements 7 are configured to support the low friction sliding means 5 and the height of the second elements 7 relative to the bottom wall 2 is smaller than the height of the first elements 6 relative to the bottom wall 2, so that, in a first position of the second elements 7 relative to the bottom wall 2, the low friction sliding means 5 do not vertically project relative to the first elements 6.

Preferably, the first and the second elements 6, 7 can be profiled elements and, more preferably, they are box shaped bars entirely extending from a front end portion 2a to a rear end portion 2b of the bottom wall 2.

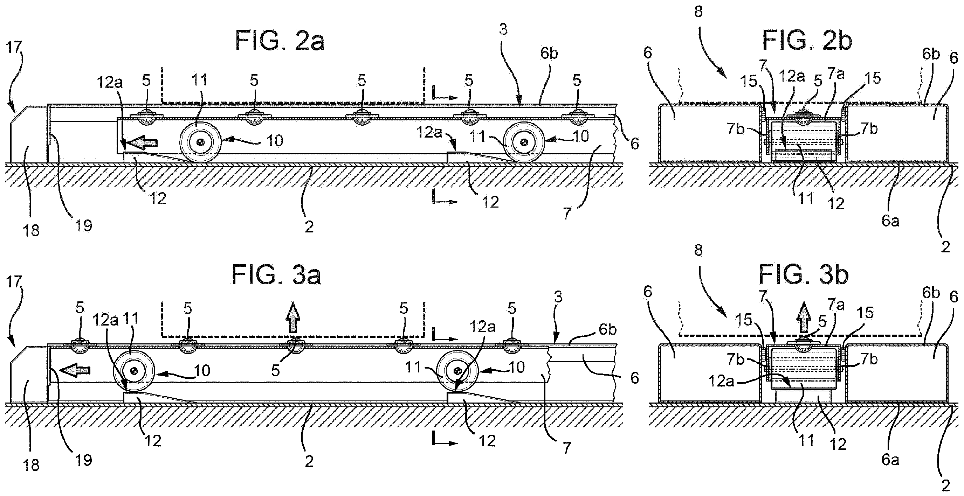

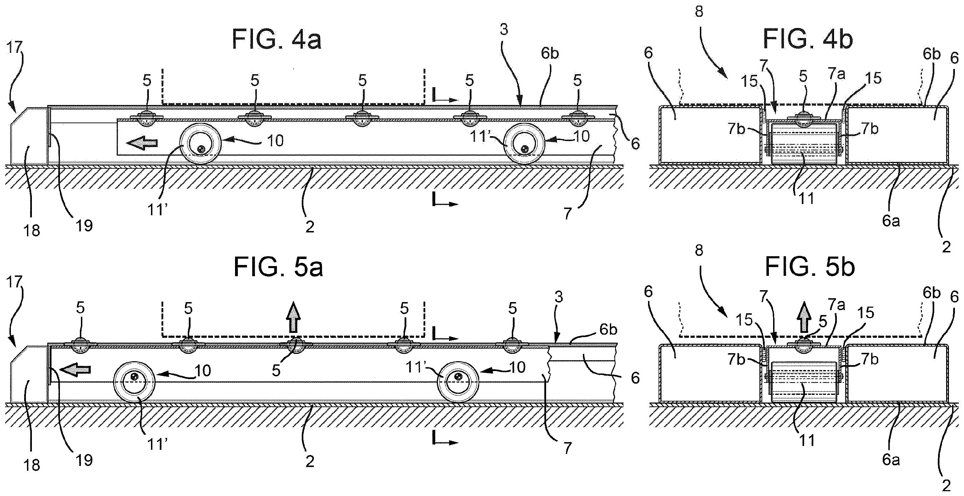

In the embodiments of the invention (see figures 2b, 4b), the first elements 6 are box shaped bars with a "D"-shaped cross section, which have a lower wall 6a fixed to the bottom wall 2 and an upper wall 6b defining part of the support plane 3, whereas the second elements 7 are box shaped bars with a "U"-shaped cross section, which are open towards the bottom wall 2 and support the low friction sliding means 5 on an upper wall 7a. Preferably, the second elements 7 extend in a transverse direction to a smaller extent than the first elements 6; more preferably, the width of the elements 7 is approximately 100 mm, whereas the width of the elements 6 is greater than 100 mm. The first elements 6 and the second elements 7 are preferably interposed with one another, so as to have a second element 7 between two first elements 6. Advantageously, the first elements 6 and the second elements 7 can be connected to one another to create a module 8, which comprises two first side elements 6 and a second central element 7 and can be repeated until the entire width of the bottom wall 2 is covered.

Preferably, the second elements 7 are arranged so that the low friction sliding means 5 are aligned with one another, thus defining a grid of low friction sliding means 5 spaced apart in two perpendicular directions defining the support plane 3. The number and/or the distance of the sliding means 5 can be changed depending on the type of boxes for which the vehicle is designed. If the vehicle is designed to transport small boxes with a large weight, a platform can be provided, which comprises different low friction sliding means 5 not very close together; vice versa, for large-sized boxes, a platform can be used, which comprises low friction sliding means 5 more distant from one another.

Advantageously, the second elements 7 are movable relative to the bottom wall by means of sliding means 10, which are connected to the second elements 7 and are configured to allow them to slide relative to the bottom wall 2. Preferably, each second element 7 comprises different sliding means 10 configured to allow the relative second element 7 to slide relative to the bottom wall 2.

In a first embodiment (figures 2a, 2b, 3a, 3b), the sliding means 10 each comprise a rotary cylinder 11 hinged in the area of the axis of rotation of the cylinder 11 itself on the second element 7. Preferably, the rotary cylinder 11 is arranged on the inside of the second element 7 and is hinged relative to side walls 7b of the second element 7.

In this embodiment, on the bottom wall 2 there is, for each rotary cylinder 11, a ramp 12, which is preferably made of nylon and is fixed to the bottom wall 2 in a known manner. Due to the action of a predetermined force, as described more in detail below, each rotary cylinder 11 is configured to climb the respective ramp 12, thus causing the low friction sliding means 5 to emerge relative to the support plane 3.

Advantageously, the height of the ramp 12 is such that, in the maximum height position of the cylinder 11, the upper wall 7b of a second element 7 is coplanar to the upper wall 6a of the first elements 6 adjacent to it. Preferably, in order to hold this maximum height position in an energetically efficient manner, each ramp 12 comprises a flat peak portion 12a, which defines a rest position, at the maximum height relative to the bottom wall 2, for the cylinders 11.

In a second embodiment (figures 4a, 4b, 5a, 5b), the sliding means 10 each comprise a cylinder 11' hinged in an eccentric manner relative to the axis of rotation of the cylinder 11' itself on the second element 7. Preferably, the rotary cylinder 11' is arranged on the inside of the second element 7 and is hinged relative to side walls 7b of the second element 7.

Due to the action of a predetermined force, as described more in detail below, each rotary cylinder 11', because of the eccentricity with which it is hinged relative to the second element 7, by rotating, lifts the latter, thus causing the low friction sliding means 5 to emerge relative to the support plane 3.

Advantageously, the hinging eccentric of the cylinder 11' relative to the axis thereof is such that, in the maximum height position d, the upper wall 7a of a second element 7 is coplanar to the upper wall 6a of the first elements 6 adjacent to it.

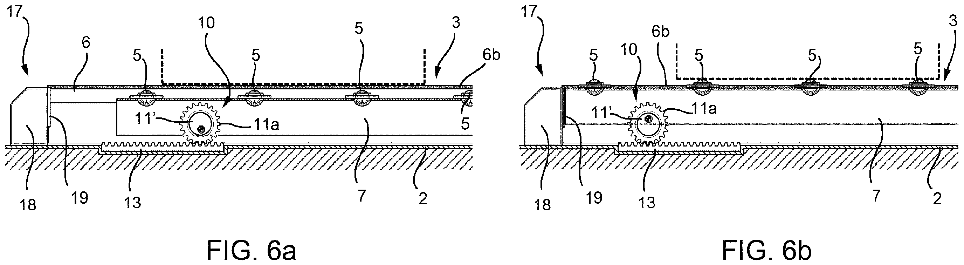

In a third possible embodiment (figures 6a, 6b), the sliding means 10 comprise a rotary cylinder 11' hinged in an eccentric manner relative to the axis of rotation of the cylinder 11' itself on the second element 7. Preferably, the rotary cylinder 11' is arranged on the inside of the second element 7 and is hinged relative to side walls 7b of the second element 7. The cylinder 11' further comprises a grooved outer surface 11a, which is configured to cooperate with a rack 13 obtained on the bottom wall 2.

Due to the action of a predetermined force, as described more in detail below, each rotary cylinder 11', because of the eccentricity with which it is hinged relative to the second element 7, by rotating, lifts the latter, thus causing the low friction sliding means 5 to emerge relative to the support plane 3.

Advantageously, the hinging eccentric of the cylinder 11' relative to the axis thereof is such that, in the maximum height position d, the upper wall 7a of a second element 7 is coplanar to the upper wall 6a of the first elements 6 adjacent to it. Furthermore, the presence of the groove 11a engaging the rack 13 allows the eccentric to be held, lifting after lifting of the second elements 7, in a precise position relative to the bottom wall 2.

According to figures 2b, 3b, 4b, 5b, between the first elements 6 and the second elements 7, the platform 1 can further comprise damping means 15, which are configured to reduce the friction caused by the relative sliding between the second elements 7 and the first elements 6. Preferably, the damping means are anti-friction wedges carried by at least one of said first and second elements 6, 7.

According to figures 2a, 3a, 4a, 5a, 6a, 6b, the platform 1 can further comprise stopping means 17 arranged at the end 2a of the bottom wall 2 towards which the second elements 7 are moved, as described hereinafter, so as to act as limit stops for each one of the second elements 7. In particular, said stopping means 17 can be projections 18 fixed to the bottom wall 2 and extending perpendicularly thereto as well as comprising shock-resistant plugs 19 designed to absorb the shock of the second elements 7 on the projection 18 itself.

With reference to figure 1, the platform 1 further comprises handling means 20, which are configured to provide each one of the second elements 7 with a force that is such as to allow them to slide relative to the bottom wall 2, thus overcoming the resistances due, in the first embodiment described herein, to the ramps 12 or, in the second and in the third embodiment described herein, to the eccentric of the cylinders 11'.

Preferably, the handling means 20 are electric or pneumatic actuators, such as for example a jack, configured to apply a force to an end portion of the second elements 7. The handling means 20 are further configured to permit a movement with a predetermined range, designed to reach the projecting condition of the low friction sliding means 5, as described above, corresponding to the maximum height condition on the ramps 12 or to the maximum eccentricity of the cylinders 11, 11'.

The activation or deactivation of the handling means 20 can be manual, for example by means of a button or a specific command given by the user, or automatic, thanks to a known control unit configured to control the handling means based on inputs that can be predetermined.

The platform 1 described above works as follows.

In a first operating configuration (figures 2a, 4a, 6a), i.e. a condition in which the objects are standing still on the platform 1, the second elements 7 are in a rest condition, in which the height of the low friction sliding means 5 is below the support plane 3. In this configuration, an object placed on the support surface 3 is supported by the first elements 6.

In a second operating configuration (figures 2b, 4b, 6b), i.e. a condition in which the objects are being moved on the platform 1, the second elements 7 are in a raised condition. In this condition, the handling means 20 push the second elements (on the ramps 12 or to overcome the eccentricity of the cylinders 11'), thus lifting the low friction sliding means 5, which, in turn, support the objects placed on them. In this way, the objects can easily be moved, sliding on the low friction sliding means 5, even with very small driving/pushing forces.

The shift from the first to the second configuration is regulated by the activation of the handling means 20, depending on the choices of the user or based on logics that can be predetermined by means of an electronic unit.

Owing to the above, the advantages of a platform 1 according to the invention are evident.

Thanks to the extraction/retraction mechanism of the low friction sliding means 5 relative to the support plane 3, heavy or bulky objects can be moved without effort and without using other handling means, such as pallet jacks or forklifts.

Thanks to the aforesaid extraction/retraction mechanism, again, the objects to be transported can be held in a fixed position relative to the support plane 3 during the whole drive of the vehicle.

The use of a pre-configured module 8 allows the platform 1 to be also used in vehicles with different shapes, simply changing the number of modules 8 and the dimensions thereof.

Furthermore, by changing the number and/or the type of low friction sliding means 5, it is possible to obtain a platform 1 that is as suitable as possible for the objects normally transported by the vehicle.

Moreover, the platform 1 described herein is compact, easy to be assembled, economic and requires a simple maintenance.

Finally, the platform 1 according to the invention can be subjected to changes and variants, which, though, do not go beyond the scope of protection set forth in the appended claims.

For example, rollers can be used instead of balls as rolling bodies for vehicles used for very heavy loads moved in a substantially longitudinal direction.

Furthermore, the lifting of the second elements 7 relative to the support plane 3 could be carried out differently, for instance by means of a dedicated circuit, or, in addition, the sliding means 10 could be manufactured differently or according to any combination of the embodiments described herein.

## Claims

1. A platform (1) for a vehicle (100) for road transport, said platform (1) defining a support plane (3) on which one or more objects to be transported by said vehicle (100) can be placed, said platform (1) comprising a plurality of low friction sliding means (5) configured to hold a first position, in which they do not project from said support plane (3) and a second position in which they project from said support plane (3) allowing said one or more objects to be supported in a sliding manner in respect to said support plane (3),
**characterized in that** said vehicle (100) comprises a bottom wall (2) on which said platform (1) is housed, said support plane (3) being defined by at least a first element (6) fixed to said bottom wall (2), said platform (1) further comprising at least a second element (7) which is mobile in respect to said bottom wall (2) and configured to house said low friction sliding means (5) and for holding a first position in respect to said bottom wall (2) in which said low friction sliding means (5) do not project from said support plane (3) and a second position in which said low friction sliding means (5) project from said support plane (3),
said first and second elements (6, 7) comprising box shaped bars extending in a longitudinal manner along said bottom wall (2) and interposed between one another.

2. The platform according to claim 1, wherein said low friction sliding means (5) comprise rolling bodies.

3. The platform according to claims 1 or 2, wherein said first and second elements (6, 7) are profiled elements.

4. The platform according to one of the claims from 1 to 3, wherein said first and second elements (6, 7) are coupled to one another so as to define a module (8) comprising a second element (7) and a pair of first elements (6) on opposite sides in respect to said second element (7).

5. The platform according to one of the claims from 1 to 4, wherein at least a said second element (7) comprises sliding means (10) configured to allow the sliding of at least said second element (7) over said bottom wall (2).

6. The platform according to claim 5, wherein said bottom wall (2) further comprising, for each of said sliding means (10), a ramp (12) on which the respective siding means (10) can slide, the maximum height of said ramp (12) being equal to the lifting of said low friction sliding means (5) in respect to said bottom wall (2).

7. The platform according to claim 5, wherein said sliding means (10) is hinged to said second element (7) in an eccentric manner, said eccentric being equal to the lifting of said low friction sliding means (5) in respect to said support plane (2).

8. The platform according to one of the claims from 1 to 7, wherein said platform (1) comprises damping means (15) arranged between said first and second elements (6, 7) configured to decrease the friction resulting from the relative sliding between said first and second elements (6, 7).

9. The platform according to claim 8, wherein said damping means (15) comprise anti-friction wedges carried by at least one of said first and second elements (6, 7).

10. The platform according to one of the claims from 1 to 9, wherein it comprises stopping means (17) configured to stop the sliding of at least one said second element.

11. The platform according to one of the claims from 1 to 10, wherein it comprises handling means (20) configured for applying a force on at least one said second element (7) to allow the sliding of the latter in respect to said bottom wall (2).

12. The platform according to claim 11, wherein said handling means (20) comprise at least one piston which can be electronically or hydraulically actuated for applying a force to at least one said second element (7).

13. A vehicle for road haulage comprising a platform according to any one of the preceding claims.

## Patentansprüche

1. Plattform (1) für ein Fahrzeug (100) für den Straßentransport, welche Plattform (1) eine Tragebene (3) definiert, auf welcher eines oder mehrere von dem Fahrzeug (100) zu transportierende Objekte angeordnet werden können, welche Plattform (1) eine Mehrzahl von Niedrigreibungs-Gleitmitteln (5) umfasst, ausgebildet, um eine erste Position einzunehmen, in welcher sie nicht von der Tragebene (3) vorspringen, und eine zweite Position, in welcher sie von der Tragebene (3) vorspringen, derart, dass eines oder mehrere Objekte gleitend bezüglich der Tragebene (3) getragen werden können,
**dadurch gekennzeichnet, dass** das Fahrzeug (100) einen Boden (2) umfasst, auf welchem die Plattform (1) aufgenommen ist, wobei die Tragebene (3) durch zumindest ein erstes Element (6) definiert wird, welches an dem Boden (2) befestigt ist, wobei die Plattform (1) ferner zumindest ein zweites Element (7) umfasst, welches bezüglich des Bodens (2) beweglich ist und ausgebildet ist, um die Niedrigreibungs-Gleitmittel (5) aufzunehmen und diese in einer ersten Position bezüglich des Bodens (2) zu halten, in welcher die Niedrigreibungs-Gleitmittel (5) nicht von der Tragebene (3) vorspringen, sowie in einer zweiten Position, in welcher die Niedrigreibungs-Gleitmittel (5) von der Tragebene (3) vorspringen,
wobei die ersten und zweiten Elemente (6,7) kastenförmige Stäbe umfassen, welche sich in Längsrichtung entlang des Bodens (2) erstrecken und zwischen einander liegen.

2. Plattform gemäß Anspruch 1, bei welcher die Niedrigreibungs-Gleitmittel (5) Wälzkörper umfassen.

3. Plattform gemäß Anspruch 1 oder 2, bei welcher die ersten und zweiten Elemente (6,7) Profilelemente sind.

4. Plattform gemäß einem der Ansprüche 1 bis 3, bei welcher die ersten und zweiten Elemente (6,7) aneinander gekoppelt sind, so dass sie ein Modul (8) bilden, umfassend ein zweites Element (7) und ein Paar erster Elemente (6) zu gegenüberliegenden Seiten des zweiten Elements (7).

5. Plattform gemäß einem der Ansprüche 1 bis 4, bei welcher zumindest das zweite Element (7) Gleitmittel (10) umfasst, ausgebildet, um ein Gleiten zumindest des zweiten Elements (7) über den Boden (2) zu ermöglichen.

6. Plattform gemäß Anspruch 5, bei welcher der Boden (2) ferner für jedes der Gleitmittel (10) eine Rampe (12) umfasst, auf welcher die jeweiligen Gleitmittel (10) gleiten können, wobei die maximale Höhe der Rampe (12) gleich dem Hub der Niedrigreibungs-Gleitmittel (5) bezüglich des Bodens (2) ist.

7. Plattform gemäß Anspruch 5, bei welcher das Gleitmittel (10) an das zweite Element (7) exzentrisch angelenkt ist, wobei die Exzentrizität gleich dem Hub der Niedrigreibungs-Gleitmittel (5) bezüglich der Tragebene (2) ist.

8. Plattform gemäß einem der Ansprüche 1 bis 7, welche Plattform (1) Dämpfungsmittel (15) umfasst, die zwischen den ersten und zweiten Elementen (6,7) angeordnet sind und dazu ausgebildet sind, die Reibung zu vermindern, welche durch das Gleiten der ersten und zweiten Elemente (6,7) gegeneinander erzeugt wird.

9. Plattform gemäß Anspruch 8, bei welcher die Dämpfungsmittel (15) Anti-Reibungs-Keile umfassen, welche von zumindest einem der ersten und zweiten Elemente (6,7) getragen werden.

10. Plattform gemäß einem der Ansprüche 1 bis 9, welche Anschlagsmittel (17) umfassen, ausgebildet, um das Gleiten von zumindest dem zweiten Element zu stoppen.

11. Plattform gemäß einem der Ansprüche 1 bis 10, welche Handhabungsmittel (20) umfasst, ausgebildet zur Ausübung einer Kraft auf zumindest das zweite Element (7), um ein Gleiten des letzteren bezüglich des Bodens zu ermöglichen.

12. Plattform gemäß Anspruch 11, bei welcher die Handhabungsmittel (20) zumindest einen Kolben umfassen, welcher elektronisch oder hydraulisch zur Ausübung einer Kraft auf zumindest das zweite Element (7) betätigt werden kann.

13. Fahrzeug zum Straßentransport, umfassend eine Plattform gemäß einer der vorhergehenden Ansprüche.

## Revendications

1. Plate-forme (1) pour un véhicule (100) pour transport routier, ladite plate-forme (1) définissant un plan de support (3) sur lequel peuvent être placés un ou plusieurs objets à transporter par ledit véhicule (100), ladite plate-forme (1) comprenant une pluralité de moyens coulissants (5) à faible frottement configurés pour maintenir une première position, dans laquelle ils dépassent pas du plan de support (3) et une seconde position dans laquelle ils dépassent du plan de support (3) permettant audit ou auxdits objets d'être supportés d'une manière coulissante par rapport audit plan de support (3),
**caractérisée en ce que** ledit véhicule (100) comprend une paroi de fond (2) sur laquelle est logée ladite plate-forme (1), ledit plan de support (3) étant défini par au moins un premier élément (6) fixé à ladite paroi de fond (2), ladite plate-forme (1) comprenant en outre au moins un second élément (7) qui est mobile par rapport à ladite paroi de fond (2) et configuré pour loger lesdits moyens coulissants (5) à faible frottement et pour maintenir une première position par rapport à ladite paroi de fond (2) dans laquelle lesdits moyens coulissants (5) à faible frottement ne dépassent pas du plan de support (3) et une seconde position dans laquelle les moyens coulissants (5) à faible frottement dépassent du plan de support (3),
lesdits premier et second éléments (6, 7) comprenant des barres en forme de boîte s'étendant d'une manière longitudinale le long de ladite paroi de fond (2) et interposées les unes entre les autres.

2. Plate-forme selon la revendication 1, dans laquelle lesdits moyens coulissants (5) à faible frottement comprennent des corps roulants.

3. Plate-forme selon la revendication 1 ou 2, dans laquelle lesdits premier et second éléments (6, 7) sont des éléments profilés.

4. Plate-forme selon l'une des revendications 1 à 3, dans laquelle lesdits premier et second éléments (6, 7) sont accouplés entre eux de manière à définir un module (8) comprenant un second élément (7) et une paire de premiers éléments (6) sur des côtés opposés par rapport audit second élément (7).

5. Plate-forme selon l'une des revendications 1 à 4, dans laquelle au moins un dit second élément (7) comprend des moyens coulissants (10) configurés pour permettre le coulissement d'au moins ledit second élément (7) par-dessus ladite paroi de fond (2).

6. Plate-forme selon la revendication 5, dans laquelle ladite paroi de fond (2) comprenant en outre, pour chacun desdits moyens coulissants (10), une rampe (12) sur laquelle peuvent coulisser les moyens coulissants (10) respectifs, la hauteur maximale de ladite rampe (12) étant égale au levage desdits moyens coulissants (5) à faible frottement par rapport à ladite paroi de fond (2).

7. Plate-forme selon la revendication 5, dans laquelle lesdits moyens coulissants (10) s'articulent sur ledit second élément (7) d'une manière excentrique, ledit excentrique étant égal au levage desdits moyens coulissants (5) à faible frottement par rapport audit plan de support (2).

8. Plate-forme selon l'une des revendications 1 à 7, dans laquelle ladite plate-forme (1) comprend des moyens d'amortissement (15) agencés entre lesdits premier et second éléments (6, 7) configurés pour diminuer le frottement résultant du coulissement relatif entre lesdits premier et second éléments (6, 7) .

9. Plate-forme selon la revendication 8, dans laquelle lesdits moyens d'amortissement (15) comprennent des cales anti-frottement portées par au moins l'un desdits premier et second éléments (6, 7).

10. Plate-forme selon l'une des revendications 1 à 9, dans laquelle elle comprend des moyens d'arrêt (17) configurés pour arrêter le coulissement d'au moins un dit second élément.

11. Plate-forme selon l'une des revendications 1 à 10, dans laquelle elle comprend des moyens de manipulation (20) configurés pour appliquer une force sur au moins un dit second élément (7) pour permettre le coulissement de ce dernier par rapport à ladite paroi de fond (2).

12. Plate-forme selon la revendication 11, dans laquelle lesdits moyens de manipulation (20) comprennent au moins un piston qui peut être électroniquement ou hydrauliquement actionné pour appliquer une force à au moins un dit second élément (7) .

13. Véhicule pour transport routier comprenant une plate-forme selon l'une quelconque des revendications précédentes.
